# EUROPÄISCHE PATENTSCHRIFT

(11) **EP 3 665 401 B1**
(45) Veröffentlichungstag und Bekanntmachung des Hinweises auf die Patenterteilung: **03.01.2024**
(21) Anmeldenummer: 18753354.2
(22) Anmeldetag: 06.08.2018
(51) Int. Cl.: F16F 15/173

(54) **VISKOSITÄTS-DREHSCHWINGUNGSDÄMPFER ODER -TILGER FÜR EINE KURBELWELLE EINES VERBRENNUNGSMOTORS**
VISCOSITY-TORSIONAL VIBRATION DAMPER OR ABSORBER FOR A CRANKSHAFT OF A COMBUSTION ENGINE
AMORTISSEUR DE VIBRATIONS TORSIONNELLES À VISCOSITÉ POUR UN VILEBREQUIN D'UN MOTEUR À COMBUSTION INTERNE

(30) Priorität: 10.08.2017 DE 102017118265
(43) Veröffentlichungstag der Anmeldung: 17.06.2020
(73) Patentinhaber: Hasse & Wrede GmbH, 12681 Berlin (DE)
(72) Erfinder: KNOPF, Florian, 14199 Berlin (DE); STEIDL, Michael, 10318 Berlin (DE)
(74) Vertreter: Specht, Peter
(86) Internationale Anmeldenummer: PCT/EP2018/071270
(87) Internationale Veröffentlichungsnummer: WO 2019/030174

(56) Entgegenhaltungen:
- EP-A1- 1 288 527
- WO-A1-2005/038293
- DE-A1- 19 740 685
- DE-C- 970 876

## Beschreibung

Die vorliegende Erfindung betrifft einen Viskositäts-Drehschwingungsdämpfer oder -tilger für eine Kurbelwelle eines Verbrennungsmotors, mit einer an der Kurbelwelle befestigbaren ringartigen Dämpfungs- oder Tilgungsanordnung, nach dem Oberbegriff des Anspruchs 1.

Viskositäts-Drehschwingungsdämpfer oder -tilger der gattungsgemäßen Art sind in verschiedensten Ausführungsformen bekannt, so aus der gattungsgemäßen EP 1 288 527 A1.

Derartige Drehschwingungsdämpfer oder -tilger werden zur Minderung des Effektes von Torsionsschwingungen eingesetzt.

Im modernen Motorenbau werden zur Verbesserung des Wirkungsgrades und zur Einhaltung der einschlägigen Abgasnormen zunehmend höhere Gasdrücke in den Zylindern verwirklicht, darüber hinaus werden zur Erreichung einer Leichtbauweise und Gewichtsersparnis Reduktionen der Kurbelwellenabmessungen verwirklicht.

Diese Kombination aus stärkerer Schwingungserregung und weicheren, leichteren schwingungsfähigen Systemen führt zu einem immer kritischeren Schwingungsverhalten der Kurbelwellen. Dies gilt sowohl für Drehschwingungen wie auch für axiale Schwingungen und Biegeschwingungen der Kurbelwellen.

Die Drehschwingungen können durch immer leistungsfähigere Drehschwingungsdämpfer oder -tilger reduziert werden.

Dämpfen ist das Umwandeln von Bewegungsenergie (kinetische Energie) in Energieformen, die für das betrachtete schwingungsfähige System unwirksam sind. Die Dämpfer leisten dabei eine Umwandlung von kinetischer Energie in Wärme aufgrund innerer oder äußerer Reibungsvorgänge. Dämpfung ist also Energiedissipation. Dämpfung bewirkt eine Reduktion der Resonanzen eines Systems und reduziert nicht die Drehungleichförmigkeit eines drehschwingungsfähigen Systems. Ein Beispiel ist der Viskositätsdrehschwingungsdämpfer. Das Prinzip der Schwingungstilgung basiert hingegen auf einer Massenkraftkompensation - die Tilgermasse schwingt gegenphasig zur erregenden Kraft. Durch einen an einem schwingungsfähigen System zusätzlich angebrachten Tilger erhöht sich die Anzahl der Systemfreiheitsgrade um mindestens eins. Die Tilgerabstimmung kann je nach Anforderung auf unterschiedliche Art erfolgen.

Axial- und Biegeschwingungen sind bei den bislang bekannten Konstruktionen von Drehschwingungsdämpfern oder -tilgern praktisch noch nicht berücksichtigt.

Die Axial- und Biegeschwingungen der Kurbelwelle werden über einen beispielsweise über einen Flansch an der Kurbelwelle befestigbaren Drehschwingungsdämpfer oder -tilger übertragen und haben folgende negative Auswirkungen:
Einerseits werden am Dämpferflansch und am Gehäuse des Drehschwingungsdämpfers oder -tilgers Spannungen verursacht, was bislang durch teure und schwere, größere Wandstärken verhindert wurde.

Die Spannungen können bei Viskositäts-Drehschwingungsdämpfern oder - tilgern auch zu einem erhöhten Verschleiß der Lagerung des Schwungringes im Gehäuse führen, zudem kann es durch die Überlagerung mit den Drehschwingungen auch zu einer verminderten Wirksamkeit der Drehschwingungsdämpfung oder -Tilgung kommen.

Der vorliegenden Erfindung liegt die Aufgabe zugrunde, die vorstehend genannten Nachteile eines Viskositäts-Drehschwingungsdämpfers oder -tilgers weitgehend zu vermeiden.

Diese Aufgabe wird durch den Gegenstand des Anspruchs 1 gelöst. Die Erfindung betrifft ferner eine Kurbelwelle mit einer derartigen Dämpfungs- oder Tilgungsanordnung.

Es ist vorgesehen, dass die Dämpfungs- oder Tilgungsanordnung in einem äu-ßeren Durchmesserbereich an einer Halteeinrichtung angeordnet, insbesondere befestigt, ist, die andererseits an der Kurbelwelle anordbar, insbesondere befestigbar ist und in Achsrichtung der Kurbelwelle federfähig, radial zur Kurbelwelle hingegen eigensteif ausgebildet ist.

Hierdurch wird erreicht, dass möglicherweise auftretende Axialschwingungen weitgehend isoliert, Torsionsschwingungen aber durch die Wirkung nach wie vor gedämpft werden.

Es ist weiter vorgesehen, dass die Dämpfungs- oder Tilgungsanordnung ein an der Kurbelwelle befestigbares ringartiges Gehäuse mit einem darin in einem Silikonöl oder dergleichen relativ zum Gehäuse drehbar gelagerten Schwungring aufweist.

Hierdurch wird erreicht, dass möglicherweise auftretende Axialschwingungen weitgehend isoliert, Torsionsschwingungen aber durch die Wirkung nach wie vor gedämpft werden.

Dabei ist weiter vorgesehen, dass das Gehäuse in einem äußeren Durchmesserbereich an beiden Stirnflächen an zwei der Halteeinrichtungen befestigt ist. Zudem ist vorgesehen, dass das Gehäuse an beiden Stirnflächen an jeweils einer der Halteeinrichtungen befestigt ist, die in Richtung der Kurbelwelle über das Gehäuse hinaus vorstehen und in diesem vorstehenden Bereich durch eine Distanzhülse miteinander verbunden und insgesamt an der Kurbelwelle festlegbar sind.

Diese Konstruktion bietet insbesondere den Vorteil, dass das Dämpfergehäuse, wie in vielen anderen Anwendungsfällen schon bekannt, als Riemenscheibe fungieren kann und das durch den Riemen eingeleitete Biegemoment durch die beiden Halteeinrichtungen ohne Verformung aufgenommen werden kann.

Weitere vorteilhafte Merkmale der Erfindung sind der Gegenstand der Unteransprüche.

Ausführungsbeispiele der Erfindung sind in den beigefügten Zeichnungen dargestellt und werden im Folgenden näher beschrieben. Es zeigen:
- Fig. 1: einen Teilschnitt durch einen erfindungsgemäßen Viskositäts-Drehschwingungsdämpfers
- Fig. 2: eine schematisch dargestellte Ansicht in Richtung des Pfeiles II in Figur 1 mit alternativen Ausgestaltungen einer Halteeinrichtung für ein Gehäuse des Viskositäts-Drehschwingungsdämpfers aus Fig. 1
- Fig. 3: ein weiteres Ausführungsbeispiel für eine Halteeinrichtung eines Gehäuses eines Viskositäts-Drehschwingungs-dämpfers
- Fig. 4: eine weitere Halteeinrichtung für ein Gehäuse eines Drehschwingungsdämpfers
- Fig. 5: einen der Fig. 1 entsprechenden Teilschnitt durch ein weiteres Ausführungsbeispiel der Erfindung.

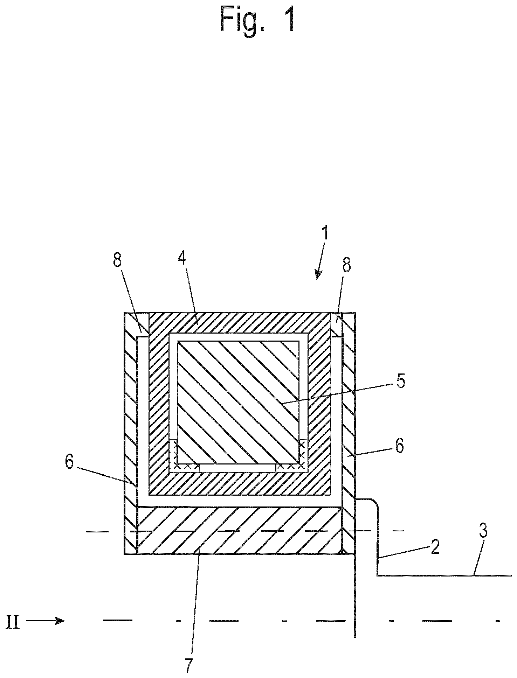

In Fig. 1 ist mit dem Bezugszeichen 1 insgesamt ein Viskositäts-Drehschwingungsdämpfer bezeichnet, der an einem Flansch 2 einer Kurbelwelle 3 eines Verbrennungsmotors festlegbar ist. Die nachfolgenden Ausführungen sind analog auf Viskositäts-Drehschwingungstilger übertragbar.

Der Viskositäts-Drehschwingungsdämpfer 1 der Fig. 1 umfasst als ringartige Dämpfungs- oder Tilgungsanordnung in bevorzugter Ausgestaltung ein ringartiges Gehäuse 4 mit einem darin in einem viskosen Medium wie einem Silikonöl oder dergleichen drehbar gelagerten Schwungring 5.

Er umfasst ferner hier zwei Halteeinrichtungen 6, welche einerseits an einander gegenüberliegenden Stirnflächen des Gehäuses 4 und andererseits an einer Distanzhülse 7 befestigt sind, wobei die beiden Halteeinrichtungen 6 gemeinsam mit der Distanzhülse 7 am Flansch 2 einer Kurbelwelle 3 festlegbar sind. Die Verbindung der Halteeinrichtungen 6 zum Gehäuse 4 erfolgt im äußeren Durchmesserbereich des Gehäuses 4. Dabei können die Halteeinrichtungen 6 hier weiter in bevorzugter Ausgestaltung jeweils über Distanzstücke oder Distanzringe 8 auf Abstand zu den Stirnflächen des Gehäuses 4 gehalten sein.

Die Halteeinrichtungen 6 sind derart gestaltet, dass diese Halteeinrichtungen radial zur Kurbelwelle 3 eigensteif ausgebildet und in Achsrichtung der Kurbelwelle 3 hingegen federfähig gestaltet sind.

Wie Fig. 1 deutlich zeigt, stehen die Halteeinrichtungen 6 in Richtung der Kurbelwelle 3 über das Gehäuse 4 hinaus vor und sind in diesem Bereich mit der Distanzhülse 7 und dem Flansch 2 der Kurbelwelle 3 befestigt.

Bedingt dadurch, dass die Halteeinrichtungen 6 axial federfähig ausgebildet sind, besteht die Möglichkeit, im Betrieb auftretende Axialschwingungen der Kurbelwelle 3 wirkungsvoll zu dämpfen oder zu tilgen.

Da die Halteeinrichtungen 6 in radial zur Kurbelwelle 3 verlaufender Richtung hingegen eigensteif ausgebildet sind, wird die Wirkung des Viskositäts-Drehschwingungsdämpfers oder -tilgers 1 in Umfangsrichtung nicht beeinträchtigt.

Das in Fig. 1 dargestellte Ausführungsbeispiel der Erfindung mit zwei Halteeinrichtungen 6 zu beiden Stirnseiten des Gehäuses 4 bietet den Vorteil, dass das Gehäuse 4 bei Bedarf auch als Riemenscheibe fungieren kann, da das durch den Riemen eingeleitete Biegemoment durch die beiden Halteeinrichtungen 6 ohne Verformung aufgenommen werden kann.

Ist die Verwendung des Viskositäts-Drehschwingungsdämpfers oder -tilgers 1 hingegen ohne die Nutzung eines Riemens vorgesehen, genügt auch eine einzige Halteeinrichtung 6 an einer axialen Stirnseite des Gehäuses 4.

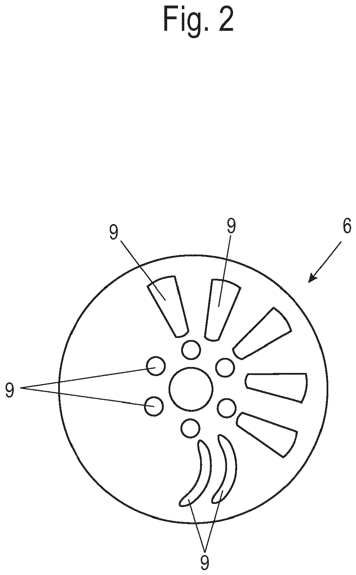

Die Halteeinrichtungen 6 können vorteilhafterweise aus ringförmigen Verbindungsscheiben gebildet sein. Diese ringförmigen Verbindungsscheiben können, wie **Fig. 2** sehr deutlich zeigt, zur Einstellung einer gewünschten Federfähigkeit axial zur Kurbelwelle 3 mit Durchbrechungen 9 verschiedener grafischer Gestaltung durchbrochen sein.

So ist es möglich, kreisförmige, sektorförmige oder sichelförmige Durchbrechungen 9 anzubringen, um eine gewünschte axiale Federfähigkeit der Halteeinrichtungen 6 zu erzielen.

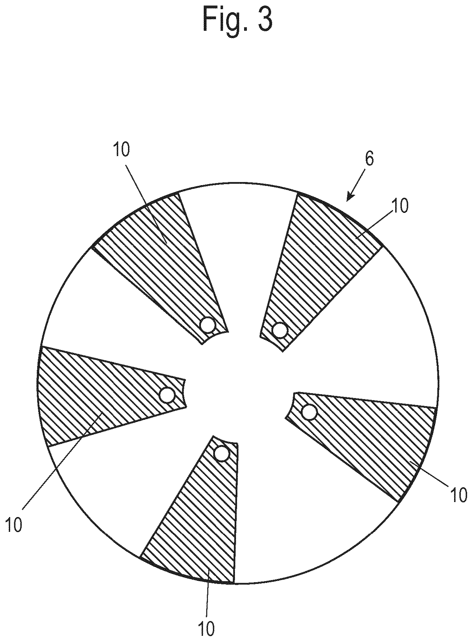

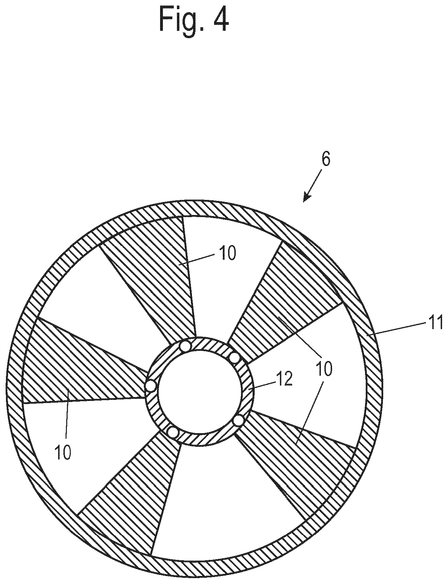

Wie die Figuren 3 und 4 deutlich machen, können die Halteeinrichtungen 6 aber auch aus mehreren, sektorenförmigen Streben 10 gebildet sein, die an ihren äußeren Enden an einem Ring 11 und im zentralen Bereich an einer Hülse 12 befestigt sind, wodurch eine komplett fertigbare Montageeinheit gebildet wird. Denkbar ist aber auch, wie **Fig. 3** zeigt, dass die sektorenartigen Streben 10 in ihrem äußeren Randbereich direkt mit dem Gehäuse 4 und zentral an einer Distanzhülse 7 wie beim Ausführungsbeispiel nach der Fig. 1 festgelegt werden.

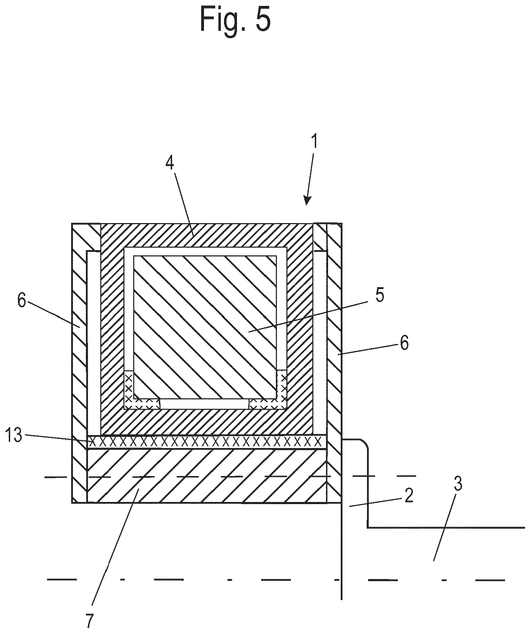

Das in **Fig. 5** dargestellte Ausführungsbeispiel der Erfindung zeigt, dass zwischen dem Gehäuse 4 und der Distanzhülse 7 ein insbesondere in Axialrichtung wirkendes Dämpfungselement, welches beispielsweise die Form eines Ringes 13 aufweisen kann, angeordnet ist, wobei dieses Dämpfungselement stirnseitig bis an die beiden Halteeinrichtungen 6 heranreicht. Durch diese schwingungsisolierte Befestigung des Dämpfers an der Kurbelwelle 3 werden die axialen Eigenfrequenzen des Systems Kurbelwelle - Dämpfer erhöht (bis auf die Frequenz der Schwingungsisolierung). Dies kann vorteilhaft sein, da dadurch gleichzeitig die Resonanzfrequenzen erhöht werden und im günstigen Falle diese Resonanzen dann außerhalb des Anregungsspektrums liegen.

Durch die hier gezeigte zusätzliche Dämpfung zwischen Dämpfergehäuse 4 und Kurbelwellenflansch 2, bei der der Ring 13 beispielsweise aus einem Elastomer besteht, wird aber nicht nur die Schwingungsisolierung gedämpft, sondern auch sämtliche Axial-Resonanzfrequenzen, womit der Viskositäts-Drehschwingungsdämpfer 1 dann die Zusatzfunktion eines seismischen Axial-Schwingungsdämpfers übernimmt. Die Abstimmung der Funktion "Drehschwingungsdämpfung" ist dabei vollkommen unabhängig von der Funktion "Axial-Schwingungsdämpfung".

### Bezugszeichenliste

- 1: Viskositäts-Drehschwingungsdämpfer
- 2: Flansch
- 3: Kurbelwelle
- 4: Gehäuse
- 5: Schwungring
- 6: Halteeinrichtung
- 7: Distanzhülse
- 8: Distanzring
- 9: Durchbrechung
- 10: Strebe
- 11: Ring
- 12: Hülse
- 13: Ring

## Patentansprüche

1. Viskositäts-Drehschwingungsdämpfer oder -tilger (1) für eine Kurbelwelle (3) eines Verbrennungsmotors, mit einer an der Kurbelwelle (3) befestigbaren ringartigen Dämpfungs- oder Tilgungsanordnung, wobei die Dämpfungs- oder Tilgungsanordnung in einem äußeren Durchmesserbereich an einer Halteeinrichtung (6) angeordnet, insbesondere befestigt ist, die andererseits an der Kurbelwelle (3) anordbar, insbesondere befestigbar ist und die in Achsrichtung der Kurbelwelle (3) federfähig, radial zur Kurbelwelle (3) hingegen eigensteif ausgebildet ist und wobei die Dämpfungs- oder Tilgungsanordnung ein an der Kurbelwelle (3) befestigbares ringartiges Gehäuse (4) mit einem darin in einem Silikonöl oder dergleichen relativ zum Gehäuse drehbar gelagerten Schwungring (5) aufweist, wobei das Gehäuse (4) ferner in einem äußeren Durchmesserbereich an beiden Stirnflächen an der einen oder an zwei der Halteeinrichtungen (6) befestigt ist,
**dadurch gekennzeichnet, dass** zwei der Halteeinrichtungen (6) an zwei einander gegenüberliegenden Stirnflächen des Gehäuses (4) befestigt sind, die in Richtung der Kurbelwelle (3) über das Gehäuse (4) hinaus vorstehen und in diesem vorstehenden Bereich durch eine Distanzhülse (7) miteinander verbunden und insgesamt an der Kurbelwelle (3) festlegbar sind.

2. Viskositäts-Drehschwingungsdämpfer oder -tilger (1) nach Anspruch 1,
**dadurch gekennzeichnet, dass** die Halteeinrichtungen (6) aus einer ringförmigen Verbindungsscheibe gebildet ist bzw. sind.

3. Viskositäts-Drehschwingungsdämpfer oder -tilger (1) nach einem der Ansprüche 1 bis 2, **dadurch gekennzeichnet, dass** die Halteeinrichtungen (6) jeweils aus mehreren, sektorenförmigen Streben (10) besteht bzw. bestehen.

4. Viskositäts-Drehschwingungsdämpfer oder -tilger (1) nach Anspruch 3,
**dadurch gekennzeichnet, dass** die Verbindungsscheiben oder die Streben (10) mit axialen Durchbrechungen (9) versehen sind.

5. Viskositäts-Drehschwingungsdämpfer oder -tilger (1) nach Anspruch 4,
**dadurch gekennzeichnet, dass** die Durchbrechungen (9) kreisrund, bogenförmig und/oder sektorenförmig ausgebildet sind.

6. Viskositäts-Drehschwingungsdämpfer oder -tilger (1) nach einem der vorhergehenden Ansprüche, **dadurch gekennzeichnet, dass** zwischen der Distanzhülse (7) und dem Gehäuse (4) ein insbesondere in Axialrichtung wirkendes Dämpfungselement angeordnet ist.

7. Viskositäts-Drehschwingungsdämpfer oder -tilger (1) nach Anspruch 6,
**dadurch gekennzeichnet, dass** das Dämpfungselement aus einem Ring (13) besteht, der stirnseitig an den beiden Halteeinrichtungen (6) abgestützt ist.

8. Viskositäts-Drehschwingungsdämpfer oder -tilger (1) nach Anspruch 7,
**dadurch gekennzeichnet, dass** der Ring (13) aus einem Elastomer hergestellt ist.

9. Kurbelwelle mit einem daran angeordneten, insbesondere befestigten, Viskositäts-Drehschwingungsdämpfer oder -tilger (1) nach einem oder mehreren der vorhergehendenden Ansprüche.

## Claims

1. A viscosity torsional vibration damper or absorber (1) for a crankshaft (3) of an internal combustion engine, having a ring-like damping or absorption arrangement that can be fastened on the crankshaft (3), an outer diameter region of this damping or absorption arrangement being arranged, in particular being fastened, on a holding device (6), it also being possible to arrange, in particular to fasten, this holding device (6) on the crankshaft (3) and to configure it such that it is able to spring back in the axial direction of the crankshaft (3) while remaining radially inherently rigid in relation to the crankshaft (3), and the damping or absorption arrangement having a ring-like housing (4) that can be fastened on the crankshaft (3) and containing an inertia ring (5) that is mounted rotatably in relation to the housing in a silicon oil or similar.

2. A viscosity torsional vibration damper or absorber (1) according to claim 1, **characterised in that** the holding devices (6) take the form of ringshaped connecting discs.

3. A viscosity torsional vibration damper or absorber (1) according to either of claims 1 or 2, **characterised in that** the holding devices (6) consist of a plurality of sector-shaped struts (10).

4. A viscosity torsional vibration damper or absorber (1) according to claim 3, **characterised in that** the connecting discs or struts (10) are provided with axial apertures (9).

5. A viscosity torsional vibration damper or absorber (1) according to claim 4, **characterised in that** the apertures (9) are of circular, arc-shaped and/or sector-shaped configuration.

6. A viscosity torsional vibration damper or absorber (1) according to any one of the preceding claims, **characterised in that** a damping element, in particular a damping element acting in the axial direction, is arranged between the spacer sleeve (7) and the housing (4).

7. A viscosity torsional vibration damper or absorber (1) according to claim 6, **characterised in that** the damping element consists of a ring (13), the outer face of which is supported on the two holding devices (6).

8. A viscosity torsional vibration damper or absorber (1) according to claim 7, **characterised in that** the ring (13) is made from an elastomer.

9. A crankshaft on which is arranged, in particular is fastened, a viscosity torsionpal vibration damper or absorber (1) according to any one or more of the preceding claims.

## Revendications

1. Amortisseur ou absorbeur (1) de vibrations en torsion à viscosité pour un vilebrequin (3) d'un moteur à combustion interne comprenant un agencement de type annulaire d'amortissement ou d'absorption pouvant être fixé au vilebrequin (3), dans lequel l'agencement d'amortissement ou d'absorption est monté dans une partie de diamètre extérieur d'un dispositif (6) de maintien en y étant, en particulier fixé, qui peut être monté d'autre part sur le vilebrequin (3), en particulier, en pouvant y être fixé, et qui est constitué en étant apte à agir comme un ressort dans la direction axiale du vilebrequin (3), mais en revanche en ayant une rigidité propre radialement au vilebrequin (3), et dans lequel l'agencement d'amortissement ou d'absorption a une enveloppe (4) de type annulaire, pouvant être fixée au vilebrequin (3) et ayant, à l'intérieur dans une huile de silicone ou analogue, un volant (5), monté tournant par rapport à l'enveloppe, dans lequel l'enveloppe (4) est fixée en outre dans une partie de diamètre extérieur aux deux surfaces frontales de l'un ou des deux des dispositifs (6) de maintien, **caractérisé en ce que** deux des dispositifs (6) de maintien sont fixés aux deux surfaces frontales, opposées l'une à l'autre, de l'enveloppe (4), qui font saillie dans la direction du vilebrequin (3) au-delà de l'enveloppe (4) et, dans cette partie en saillie, sont reliés l'un à l'autre par un manchon (7) d'entretoisement et peuvent être fixés ensemble au vilebrequin (3).

2. Amortisseur ou absorbeur (1) de vibrations en torsion à viscosité suivant la revendication 1, **caractérisé en ce que** les dispositifs (6) de maintien est/sont formé(s) d'un disque de liaison de forme annulaire.

3. Amortisseur ou absorbeur (1) de vibrations en torsion à viscosité suivant l'une des revendications 1 à 2, **caractérisé en ce que** les dispositifs (6) de maintien est/sont constitué(s) chacun de plusieurs montants (10) en forme de secteur.

4. Amortisseur ou absorbeur (1) de vibrations en torsion à viscosité suivant la revendication 3, **caractérisé en ce que** les disques de liaison ou les montants (10) sont pourvus de traversées (9) axiales.

5. Amortisseur ou absorbeur (1) de vibrations en torsion à viscosité suivant la revendication 4, **caractérisé en ce que** les traversées (9) sont circulaires, arquées et/ou en forme de secteur.

6. Amortisseur ou absorbeur (1) de vibrations en torsion à viscosité suivant l'une des revendications précédentes, **caractérisé en ce qu'**un élément d'amortissement agissant, en particulier dans la direction axiale, est disposé entre le manchon (7) d'entretoisement et l'enveloppe (4).

7. Amortisseur ou absorbeur (1) de vibrations en torsion à viscosité suivant la revendication 6, **caractérisé en ce que** l'élément d'amortissement est constitué d'un anneau (13), qui s'appuie du côté frontal sur les deux dispositifs (6) de maintien.

8. Amortisseur ou absorbeur (1) de vibrations en torsion à viscosité suivant la revendication 7, **caractérisé en ce que** l'anneau (13) est en un élastomère.

9. Vilebrequin ayant un amortisseur ou un absorbeur (1) de vibrations en torsion à viscosité suivant l'une ou plusieurs des revendications précédentes, qui y est monté en y étant, en particulier, fixé.
